# EUROPEAN PATENT APPLICATION

(11) **EP 2 918 457 A1**
(43) Date of publication of application: **16.09.2015**
(21) Application number: 14199300.6
(22) Date of filing: 19.12.2014
(51) Int. Cl.: B60S 1/38

(54) **Flat wiper blade and coupling method**

(30) Priority: 11.03.2014 KR 20140028454
(71) Applicant: KCW Corporation, Daegu 704-170 (KR)
(72) Inventor: An, Jae Hyuck, 711-777 Daegu (KR)
(74) Representative: Patronus IP Patent- und Rechtsanwälte

(57) **Abstract**

A flat wiper blade may be provided that includes: a wiper strip 10; a guide spring 30; a spoiler 40; and a seating part 100. The wiper strip 10 and the guide spring 30 are coupled to the spoiler 40. The spoiler 40 is made of an elastic material and includes a central portion 41. The seating part 100 includes a seating slot into which the central portion 41 of the spoiler 40 is inserted. The central portion 41 of the spoiler 40 is elastically transformed by being pressed and then is inserted into the seating slot of the seating part 100.

## Description

### BACKGROUND

### Field

Embodiments may relate to a flat wiper blade and a coupling method.

### Description of Related Art

In general, a wiper blade removes impurities, snow, rain or the like when driving and prevents a driver's front sight from being deteriorated. As a motor drives a link apparatus connected to a wiper arm, the wiper blade performs a repetitive reciprocating action in a fan shape.

The wiper blade includes a long wiper strip in contact with a glass surface and a guide spring which maintains and supports the wiper strip in a longitudinal direction of the wiper strip. The wiper blade including the guide spring is known as a "conventional" wiper blade in the art. Recently, a wiper blade is being employed which makes use of one guide spring curved at a predetermined curvature and formed in the form of a long thin bar. Such a wiper blade is known as a flat wiper blade or a flat-bar wiper blade in the art.

As compared with the "conventional" wiper blade, the flat wiper blade has a less height and receives less air resistance. With a uniform load, the flat wiper blade is also able to cause the wiper strip to contact with the glass surface. A flat wiper blade assembly including the flat wiper blade includes an adaptor disposed in the central portion of the guide spring. The flat wiper blade assembly is connected to a wiper arm such that the adaptor is separably connected to the end portion of the wiper arm.

The existing flat wiper blade includes a flat wiper blade in which the guide spring and the wiper strip are connected to each other by using a yoke, a flat wiper blade in which a seating part is divided into two right and left members and the two members are coupled to each other to surround the right and left of the wiper blade, so that the seating part is fixed, a flat wiper blade in which the seating part is placed on the guide spring and then the legs of the seating part are bent to surround the right and left of the guide spring, so that the seating part is fixed, and a flat wiper blade in which the legs of the seating part, the legs which surround the right and left of the guide spring, are welded with the guide spring by using an ultrasonic, etc., so that the seating part is fixed.

The flat wiper blade using the yoke has the problems that the number of parts becomes larger, and the guide spring is separated from a spoiler, and the overall height of the flat wiper blade increases. The above-mentioned existing flat wiper blade also has the larger number of parts including the wiper blade assembly and has a complex assembly method.

Therefore, there is a need to research a flat wiper blade capable of minimizing the number of the parts required for coupling the guide spring to the wiper strip by coupling the guide spring to the wiper strip without using the yoke, of reducing the manufacturing cost of the spoiler by using an extrusion molding method instead of an injection molding method, of preventing the guide spring from being separated from the spoiler, of making the assembly method thereof simpler, and of reducing the overall height thereof.

### SUMMARY

One embodiment is a flat wiper blade may be provided that includes: a wiper strip 10; a guide spring 30; a spoiler 40; and a seating part 100. The wiper strip 10 and the guide spring 30 are coupled to the spoiler 40. The spoiler 40 is made of an elastic material and includes a central portion 41. The seating part 100 includes a seating slot 101 into which the central portion 41 of the spoiler 40 is inserted. The central portion 41 of the spoiler 40 is elastically transformed by being pressed and then is inserted into the seating slot 101 of the seating part 100.

The seating part 100 may be made of a material which is rigid without being transformed.

An opening 102 may be formed under the seating slot 101 by a pair of right and left extension parts 101 a extending toward a central portion of the seating part 100 from both sides of a lower portion of the seating part 100. The width L1 of the opening 102 may be less than an inner width L2 of the seating slot 101. The seating part 100 may include an inner corner 103. The interval L3 between one upper end of the extension part 101 a and the inner corner 103 opposite to the upper end may be less than a width direction length L4 of an outer contour of a cross section of the central portion 41 of the spoiler 40, the cross section which is perpendicular to a longitudinal direction of the spoiler, and the interval L3 may be greater than a width direction length L5 of the guide spring 30. The extension part 101 a of the seating part 100 may include a first surface which comes in contact with the central portion 41 when the central portion 41 of the spoiler 40 begins to be transformed in order to be pressed and inserted into the seating slot 101 of the seating part 100, and may include a second surface which comes in contact with the central portion 41 under a state where the central portion 41 of the seating part 100 has been pressed and inserted into the seating slot 101 of the seating part 100.

The first surface of the extension part 101 a may be curved such that a thickness of the extension part 101 a is reduced toward the opening 102.

The lengths of the pair of extension parts 101 a extending toward the width direction central portion of the seating part 100 may be different from each other.

The spoiler 40 may include a coupling slot 42 into which the wiper strip 10 and the guide spring 30 are inserted.

The spoiler 40 may include a first fin 43 and a second fin 45 which are formed outwardly from the central portion 41 in the longitudinal direction of the spoiler 40. When the central portion 41 of the spoiler 40 is coupled to the seating slot 101 of the seating part 100, a first surface 44 of the first fin 43, the first surface 44 which is toward a longitudinal central portion of the spoiler, may mutually face a first seating surface 104 formed on one longitudinal end of the seating part 100, and a second surface 46 of the second fin 45, the second surface 46 which is toward the longitudinal central portion of the spoiler, may mutually face a second seating surface 106 formed on the other longitudinal end of the seating part 100.

The wiper strip 10 may include a first protrusion 14 formed on one longitudinal end of the wiper strip 10. The guide spring 30 may include a first insertion portion 34 which is formed on one longitudinal end thereof and into which the first protrusion 14 is inserted.

The wiper strip 10 may further include a second protrusion 15 formed on the other longitudinal end of the wiper strip 10. The guide spring 30 may include a second insertion portion 35 which is formed on the other longitudinal end thereof and into which the second protrusion 15 is inserted.

The first insertion portion 34 of the guide spring 30 may be open toward the one end of the guide spring 30, the one end in which the first insertion portion 34 is formed.

The seating part 100 may include an inner surface 107 on which a concave portion 108 or a convex portion 109 is formed.

The central portion 41 of the spoiler 40 may include an outer surface 47 on which a convex portion 48 or a concave portion 49 is formed.

The seating part 100 may include an inner surface 107 on which a concave portion 108 or a convex portion 109 is formed. The central portion 41 of the spoiler 40 may include an outer surface 47 on which a convex portion 48 or a concave portion 49, each of which corresponds to the concave portion 108 or the convex portion 109 respectively, is formed. When the central portion 41 of the spoiler 40 is coupled to the seating slot 101 of the seating part 100, the convex portion 48 or the concave portion 49 of the outer surface 47 of the central portion 41 of the spoiler 40 may be engaged respectively with the concave portion 108 or the convex portion 109 of the inner surface 107 of the seating part 100.

The concave portion 108 of the inner surface 107 of the seating part 100 may have a shape including at least one wedge having a catching surface 108a located at a smaller distance along the inner surface 107 from the opening 102. Or the convex portion 109 of the inner surface 107 of the seating part 100 may have a shape including at least one wedge having a catching surface 109a located at a greater distance along the inner surface 107 from the opening 102.

The convex portion 48 of the outer surface 47 of the central portion 41 of the spoiler 40 may have a shape including at least one wedge having a catching surface 48a located at a smaller distance along the outer surface 47 from the opening 102. Or the concave portion 49 of the outer surface 47 of the central portion 41 of the spoiler 40 may have a shape including at least one wedge having a catching surface 49a located at a greater distance along the outer surface 47 from the opening 102.

### BRIEF DESCRIPTION OF THE DRAWINGS

Fig. 1 is a perspective view showing an overall configuration of a flat wiper blade assembly;
Fig. 2 is an exploded perspective view showing that the flat wiper blade assembly of Fig. 1 has been disassembled;
Fig. 3 is a perspective view showing one end of a wiper strip of Fig. 2;
Fig. 4 is a perspective view showing a guide spring of Fig. 2;
Fig. 5 is a perspective view showing a central portion of a spoiler of Fig. 2;
Fig. 6 is a front view of the spoiler of Fig. 2;
Fig. 7a is a front view of the spoiler in an embodiment in which a convex portion is formed on an outer surface of the central portion of the spoiler, and Fig. 7b a front view of the spoiler in an embodiment in which a concave portion is formed on the outer surface of the central portion of the spoiler;
Figs. 8a and 8b are perspective views for describing a process in which the spoiler of Fig. 2 is coupled to the guide spring and the wiper strip of Fig. 2;
Fig. 9 is a front view of a seating part of Fig. 2;
Fig. 10a is a front view of the seating part in the embodiment in which a concave portion is formed on an inner surface of the seating part, and Fig. 10b is a front view of the seating part in the embodiment in which a convex portion is formed on the inner surface of the seating part;
Figs. 11 a and 11 b are perspective views showing a bottom surface of the seating part of Fig. 2;
Fig. 12 is a perspective view showing a process in which the seating part of Fig. 2 is coupled to the spoiler, the guide spring and the wiper strip of Fig. 2;
Fig. 13 is a cross sectional view obtained by vertically cutting a width direction central portion of the flat wiper blade in the longitudinal direction of the flat wiper blade, under the state where the seating part of Fig. 2 has been to the spoiler, the guide spring and the wiper strip of Fig. 2;
Fig. 14 is a cross sectional view taken along line A-A' shown in Fig. 1; and
Fig. 15a is a cross sectional view taken along line A-A' shown in Fig. 1 in the embodiment in which the convex portion has been formed on the outer surface of the central portion of the spoiler and the concave portion has been formed on the inner surface of the seating part, and Fig. 15b is a cross sectional view taken along line A-A' shown in Fig. 1 in the embodiment in which the concave portion has been formed on the outer surface of the central portion of the spoiler and the convex portion has been formed on the inner surface of the seating part.

### DETAILED DESCRIPTION

An embodiment of the present invention will be described in detail with reference to the accompanying drawings. In the components of the present invention, detailed descriptions of what can be clearly understood and easily carried into practice through a prior art by those skilled in the art will be omitted to avoid making the subject matter of the present invention unclear.

### < Embodiment>

Hereafter, first, the overall structure of a flat wiper blade assembly 1 will be described.

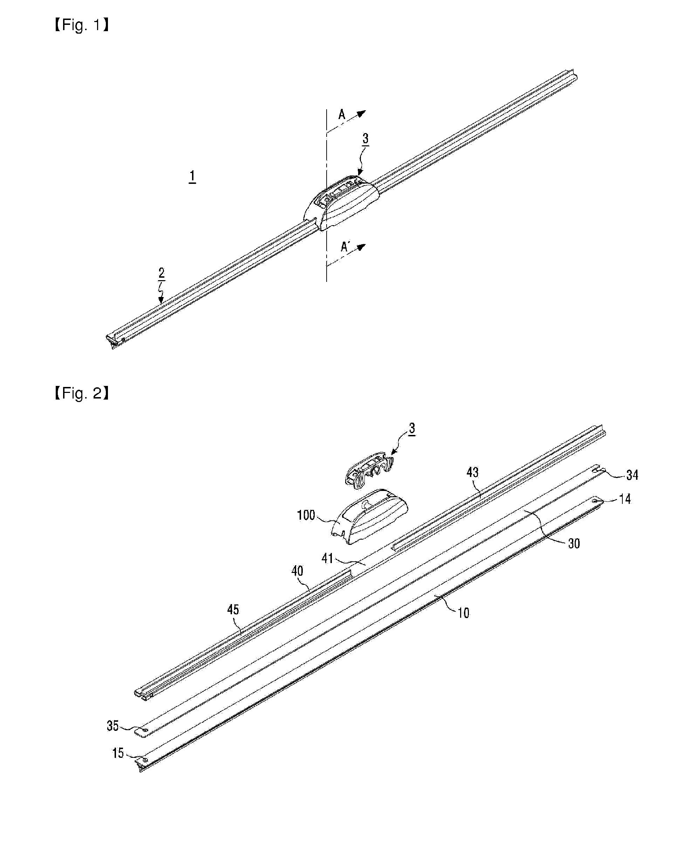

Fig. 1 is a perspective view showing an overall configuration of the flat wiper blade assembly. Fig. 2 is an exploded perspective view showing that the flat wiper blade assembly of Fig. 1 has been disassembled.

As shown in Fig. 1, the flat wiper blade assembly 1 according to the present invention includes a flat wiper blade 2 contacting closely with the glass surface of a vehicle and includes an adaptor 3 assembled to the central portion of the flat wiper blade 2 so as to connect the flat wiper blade 2 to a wiper arm (not shown).

Hereafter, the flat wiper blade 2 will be described.

As shown in Figs. 1 and 2, the flat wiper blade 2 includes a wiper strip 10 which wipes a glass surface of a vehicle with a close contact with the glass surface of the vehicle, a guide spring 30 which is disposed on the wiper strip 10 and supports the wiper strip 10, a spoiler 40 which is coupled to the wiper strip 10 and the guide spring 30 and fixes them, and a seating part 100 which connects the flat wiper blade 2 with the adaptor 3. The wiper strip 10 and the guide spring 30 are coupled to the spoiler 40. The spoiler 40 is coupled to the seating part 100.

Here, although the foregoing has described that the separate adaptor 3 which is distinguished from the seating part 100 is included, the present invention is not necessarily limited to this. The seating part 100 may be integrally formed with the adaptor 3. That is, the seating part 100 may include the adaptor 3.

The flat wiper blade 2 is connected to the front end of the wiper arm and receives a pressing force from the wiper arm with respect to the glass surface of the vehicle. The wiper arm rotates reciprocatively at a predetermined angle by a wiper motor (not shown). Accordingly, the flat wiper blade 2 wipes the glass surface (wiping surface) of the vehicle within the predetermined angle.

Hereafter, the wiper strip 10 will be described.

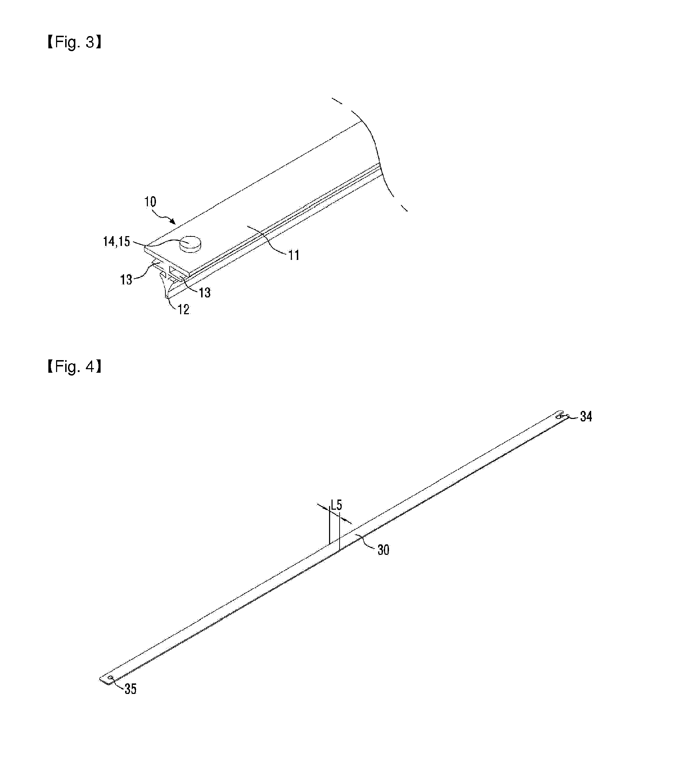

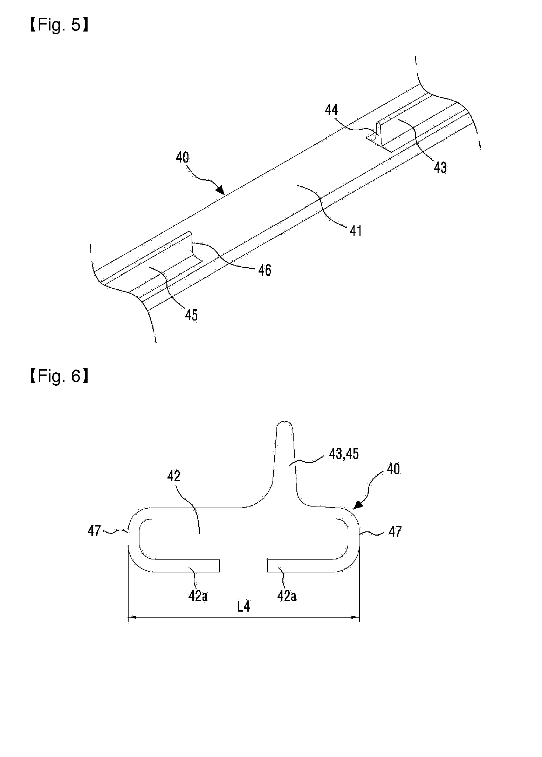

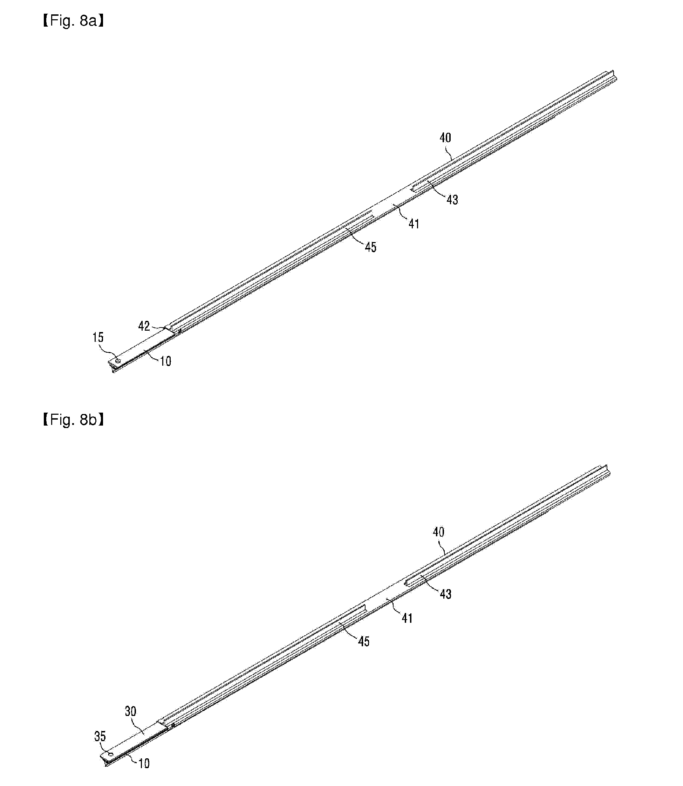

Fig. 3 is a perspective view showing an end of the wiper strip of Fig. 2. Fig. 6 is a front view of the spoiler of Fig. 2. Fig. 8b is perspective views for describing a process in which the spoiler of Fig. 2 is coupled to the guide spring and the wiper strip of Fig. 2.

As shown in Figs. 2 and 3, the wiper strip 10 includes a base 11 which is supported by the guide spring 30, and a wiping lip 12 which is disposed under the base 11 and contacts directly with and wipes the glass surface. The wiper strip 10 as a whole has a long thin shape in the major axial direction of the flat wiper blade 2 and is made of an elastic material like a rubber material or made of an elastic composite material. The wiper strip 10 is disposed to contact with the glass of the vehicle in a sliding manner and removes impurities of the glass surface.

Referring to Figs. 2, 3 and 8b, the base 11 is supported by the guide spring 30 and is inserted together with the guide spring 30 into a below-described coupling slot 42 of the spoiler 40, so that the base 11 is supported as a whole to maintain the contact with the guide spring 30. The base 11 and the wiping lip 12 continuously extend in the longitudinal direction of the wiper strip 10.

The base 11 includes a holding portion 13 which extends in the longitudinal direction of the base 11. The holding portion 13 receives in a sliding manner a pair of right and left horizontal extension part 42a (see Fig. 6) which extends horizontally toward the central portion of the spoiler 40 from both sides of the lower portion of the spoiler 40 so as to form the coupling slot 42.

Also, a first protrusion 14 may be formed on at least one longitudinal end of the base 11 of the wiper strip 10. The first protrusion 14 may be formed to be inserted into a below-described first insertion portion 34 formed at the end of the guide spring 30, the end which corresponds to the one end of the base 11. A second protrusion 15 may be formed on the other longitudinal end of the base 11 of the wiper strip 10. The second protrusion 15 may be formed to be inserted into a below-described second insertion portion 35 formed at the end of the guide spring 30, the end which corresponds to the other end of the base 11. Here, the number of the first and second protrusions 14 and 15 may correspond to the number of the first and second insertion portions 34 and 35, and the first and second protrusions 14 and 15 may be formed to have a shape corresponding to that of the first and second insertion portions 34 and 35.

Hereafter, the guide spring 30 will be described.

Fig. 4 is a perspective view showing a guide spring of Fig. 2. Figs. 8a and 8b are perspective views for describing a process in which the spoiler of Fig. 2 is coupled to the guide spring and the wiper strip of Fig. 2.

Referring to Figs. 2 and 4, the guide spring 30 has a long thin shape in the major axial direction of the flat wiper blade 2.

The first insertion portion 34 may be formed in at least one longitudinal end of the guide spring 30. The first protrusion 14 formed at the end of the wiper strip 10, the end which corresponds to the one end of the guide spring 30, is inserted into the first insertion portion 34. The second insertion portion 35 may be formed in the other longitudinal end of the guide spring 30. The second protrusion 15 formed at the end of the wiper strip 10, the end which corresponds to the other end of the guide spring 30, is inserted into the second insertion portion 35. Here, the number of the insertion portions 34 and 35 may correspond to the number of the first and second first and second protrusions 14 and 15, and the insertion portions 34 and 35 may be formed to have a shape corresponding to that of the first and second protrusions 14 and 15. Here, the first insertion portion 34 of the guide spring 30 may have a shape open toward the one end of the guide spring 30, in which the first insertion portion 34 is formed.

Referring to Figs. 8a and 8b, the wiper strip 10 and the guide spring 30 may be guided and inserted into the below-described coupling slot 42 of the spoiler 40 in the longitudinal direction thereof.

When a pressing force is applied from the wiper arm, the pressing force is distributed to the wiper strip 10 through the seating part 100, spoiler 40 and the guide spring 30. Here, the pressing force is distributed in the longitudinal direction of the wiper strip 10 by the guide spring 30. Accordingly, the guide spring 30 should have elasticity and rigidity to maintain the shape of the wiper strip 10.

Hereafter, the spoiler 40 will be described.

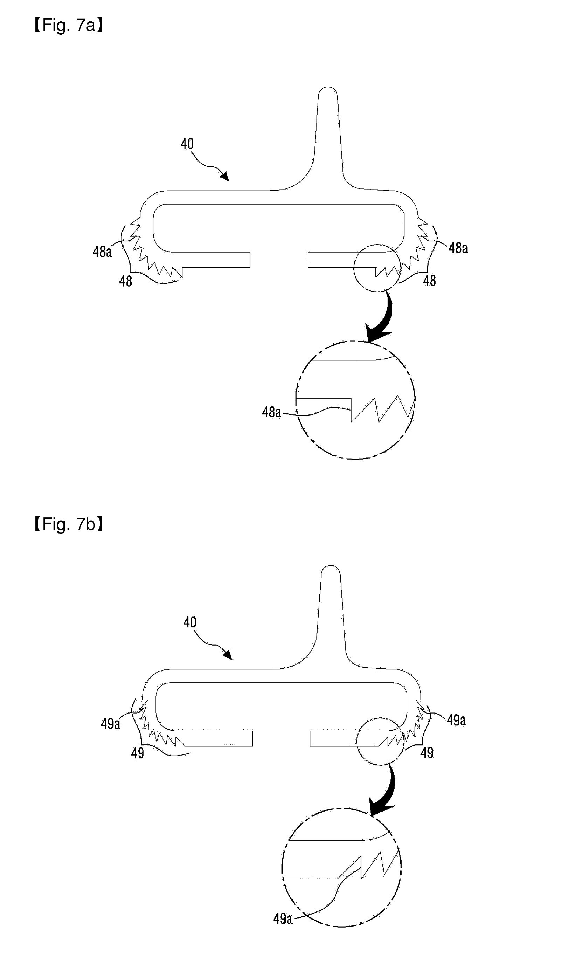

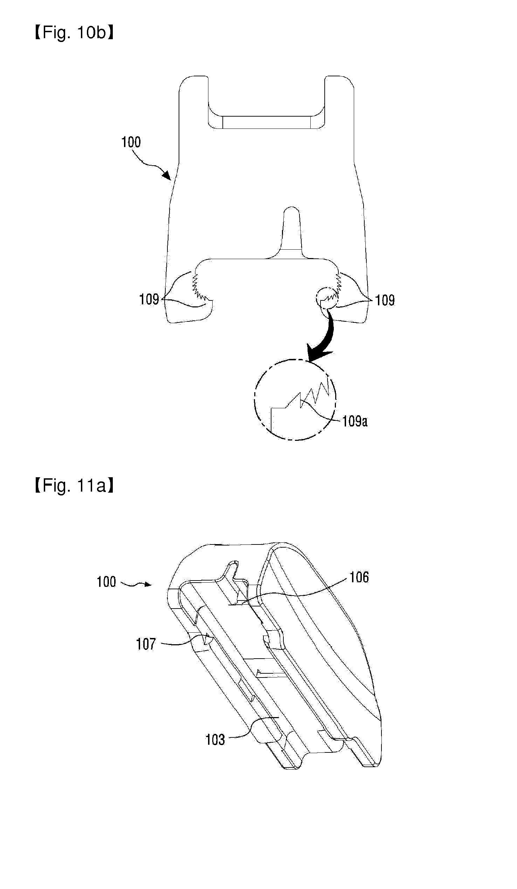

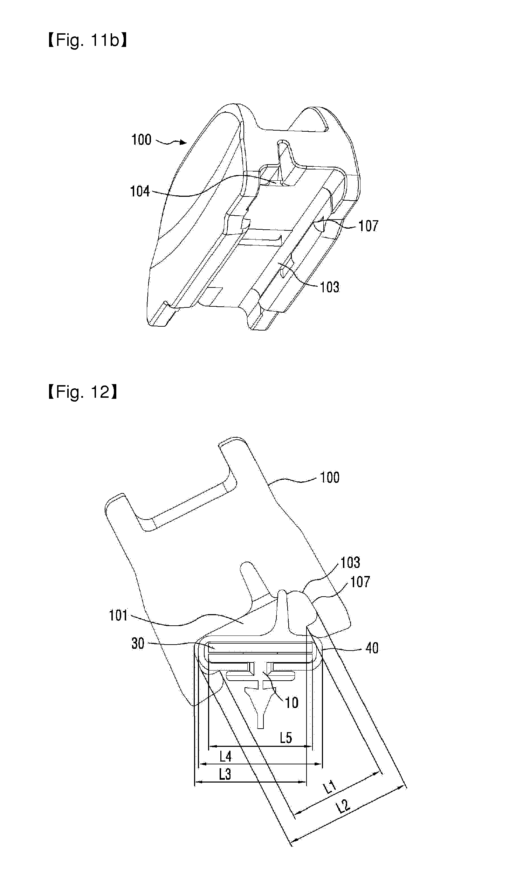

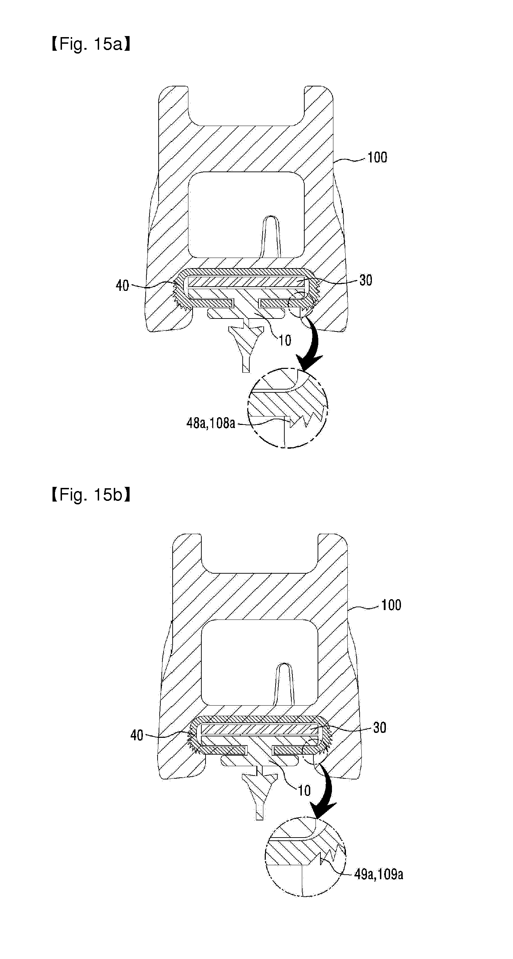

Fig. 5 is a perspective view showing a central portion of the spoiler of Fig. 2. Fig. 7a is a front view of the spoiler in an embodiment in which a convex portion is formed on an outer surface of the central portion of the spoiler, and Fig. 7b a front view of the spoiler in an embodiment in which a concave portion is formed on the outer surface of the central portion of the spoiler. Figs. 11 a and 11 b are perspective views showing a bottom surface of the seating part of Fig. 2. Fig. 12 is a perspective view showing a process in which the seating part of Fig. 2 is coupled to the spoiler, the guide spring and the wiper strip of Fig. 2. Fig. 15a is a cross sectional view taken along line A-A' shown in Fig. 1 in the embodiment in which the convex portion has been formed on the outer surface of the central portion of the spoiler and the concave portion has been formed on the inner surface of the seating part, and Fig. 15b is a cross sectional view taken along line A-A' shown in Fig. 1 in the embodiment in which the concave portion has been formed on the outer surface of the central portion of the spoiler and the convex portion has been formed on the inner surface of the seating part.

Referring to Figs. 2, 5, 6, 11 a and 11 b, the spoiler 40 has a long thin shape in the major axial direction of the flat wiper blade 2 and a cross section having an inclined top surface. The spoiler 40 is coupled to fix the wiper strip 10 and the guide spring 30 and functions to fix them. The spoiler 40 may include a first fin 43 and a second fin 45 which are formed outwardly from the spoiler 40 in the longitudinal direction of the spoiler 40, a central portion 41 which is located approximately in the middle of the spoiler 40 between the first fin 43 and the second fin 45, and the coupling slot 42 into which the wiper strip 10 and the guide spring 30 are guided and inserted. Here, the central portion 41 of the spoiler 40 may be elastically transformed by being pressed and then be inserted into a below-described seating slot 101 of the seating part 100.

The spoiler 40 may be made of a material which is relatively easier to elastically transform than the seating part 100. For example, a thermoplastic urethane resin (TPU), a thermoplastic elastomer (TPE), e.g., polycarbonate (PC), polypropylene (PP), polyvinyl chloride (PVC), ethylene propylene terpolymers (EPDM) may be used. However, the polycarbonate (PC) and the thermoplastic urethane resin (TPU) have a high manufacturing cost, and the polyvinyl chloride (PVC) cannot be applied to automotive parts due to heavy metal toxicity. Therefore, it is preferable that the spoiler 40 is manufactured with the thermoplastic elastomer (TPE), e.g., polypropylene (PP) or ethylene propylene terpolymers (EPDM).

The coupling slot 42 receives the wiper strip 10 and the guide spring 30 and is coupled in the form of surrounding the wiper strip 10 and the guide spring 30. Accordingly, the wiper strip 10 and the guide spring 30 are fixed to the spoiler 40, so that the wiper strip 10 and the guide spring 30 are not separated from the spoiler 40.

Referring to Figs. 2, 6, 8a and 8b, the spoiler 40 has a constant cross sectional shape except for the central portion 41. When a catching surface, etc., which may be fitted to a catching recess formed in the seating part is formed on the central portion 41 of the spoiler, the spoiler may not have a constant cross sectional shape. In this case, the spoiler has to be manufactured by an injection molding method. However, since the spoiler 40 according to the embodiment of the present invention has a constant cross sectional shape, the spoiler 40 can be manufactured by an extrusion molding method, thereby reducing the manufacturing cost thereof. Here, after the spoiler 40 is manufactured by the extrusion molding method, the central portion 41 may be formed by removing a longitudinal central portion of the integrally formed fin through the use of known prior arts. In the formation of the central portion 41, for the convenience of processing, after a pair of recesses having a predetermined size is first processed in both width direction sides of the longitudinal middle of the spoiler, the integrally formed fin may be removed by a predetermined numerical value in both longitudinal directions on the basis of the processed recess.

As such, when the first fin 43 and the second fin 45 are formed, a first surface 44 of the first fin 43, the first surface 44 which is toward the longitudinal central portion of the spoiler, and a second surface 46 of the second fin 45, the second surface 46 which is toward the longitudinal central portion of the spoiler, are simultaneously formed (see Fig. 5).

Referring to Figs. 7a and 7b, a convex portion 48 or a concave portion 49 may be formed on an outer surface 47 of the central portion 41 of the spoiler 40. Here, when the central portion 41 of the spoiler 40 is elastically transformed by being pressed and then is inserted into the below-described seating slot 101 of the seating part 100, the convex portion 48 or the concave portion 49 of the spoiler 40 may be formed only in an area formed by the contact of the outer surface 47 of the central portion 41 with a below-described inner surface 107 of the seating part 100. However, it is not necessarily required that the convex portion 48 or the concave portion 49 of the spoiler 40 is formed on the entire outer surface 47 of the central portion 41. It can be considered that the convex portion 48 or the concave portion 49 of the spoiler 40 is formed on a portion of the outer surface 47. It can be also considered that the convex portion 48 and the concave portion 49 are formed together with each other or there is a predetermined gap between the convex portions 48 or between the concave portions 49.

The convex portion 48 or the concave portion 49 of the outer surface 47 of the central portion 41 may have various shapes. For example, the convex portion 48 of the outer surface 47 of the central portion 41 may have a shape including at least one wedge. Each of the wedges has a catching surface 48a located at a smaller distance along the outer surface 47 from an opening 102 of the below-described seating slot 101 of the seating part 100 when the central portion 41 of the spoiler 40 is elastically transformed by being pressed and then is inserted into the below-described seating slot 101 of the seating part 100. The concave portion 49 of the outer surface 47 of the central portion 41 may have a shape including at least one wedge. Each of the wedges has a catching surface 49a located at a greater distance along the outer surface 47 from the opening 102 of the below-described seating slot 101 of the seating part 100 when the central portion 41 of the spoiler 40 is elastically transformed by being pressed and then is inserted into the below-described seating slot 101 of the seating part 100.

Here, although the convex portion 48 or the concave portion 49 is formed on the outer surface 47 of the central portion 41, the spoiler 40 has a constant cross sectional shape, so that the spoiler 40 can be manufactured by the extrusion molding method. As a result, the manufacturing cost of the spoiler 40 is reduced.

Hereafter, the seating part 100 will be described.

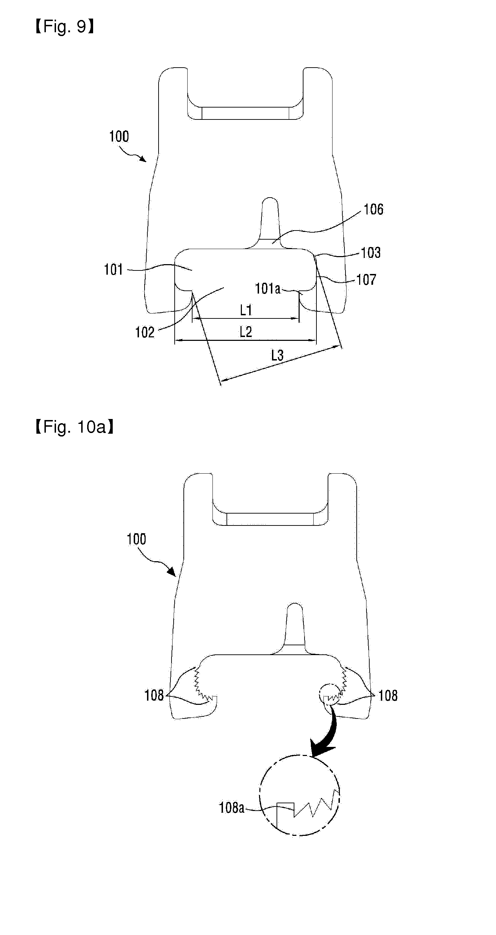

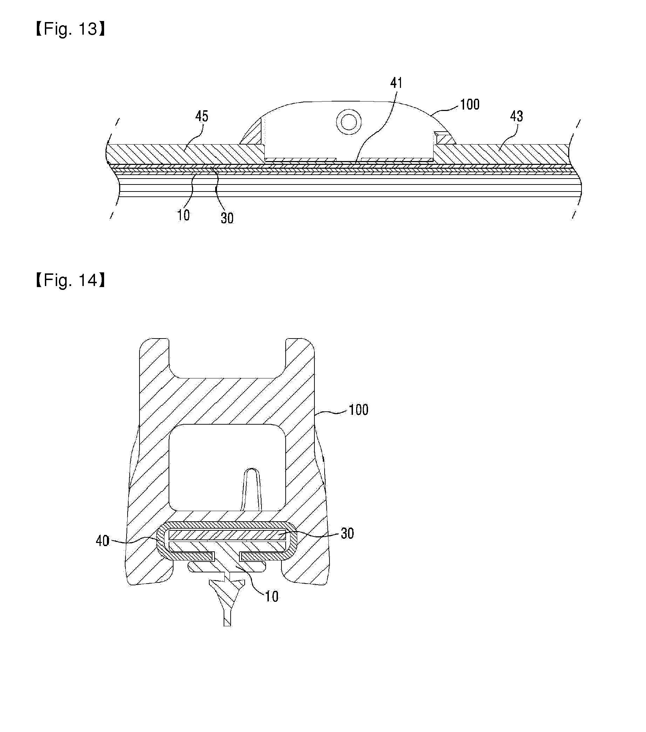

Fig. 9 is a front view of a seating part of Fig. 2. Fig. 10a is a front view of the seating part in the embodiment in which a concave portion is formed on an inner surface of the seating part, and Fig. 10b is a front view of the seating part in the embodiment in which a convex portion is formed on the inner surface of the seating part. Figs. 11 a and 11 b are perspective views showing a bottom surface of the seating part of Fig. 2. Fig. 13 is a cross sectional view obtained by vertically cutting a width direction central portion of the flat wiper blade in the longitudinal direction of the flat wiper blade, under the state where the seating part of Fig. 2 has been to the spoiler, the guide spring and the wiper strip of Fig. 2. Fig. 14 is a cross sectional view taken along line A-A' shown in Fig. 1.

Referring to Figs. 2, 9, 11 a and 11 b, the seating part 100 connects the flat wiper blade 2 with the adaptor 3. The seating part 100 includes the seating slot 101 into which the seating portion 41 of the spoiler 40 is elastically transformed by being pressed and then is inserted, a first seating surface 104 which is formed on one longitudinal end of the seating part 100 and mutually faces the first surface 44 of the first fin 43 of the spoiler 40 when the central portion 41 of the spoiler 40 is elastically transformed by being pressed and then is inserted into the below-described seating slot 101 of the seating part 100, and a second seating surface 106 which is formed on the other longitudinal end of the seating part 100 and mutually faces the second surface 46 of the second fin 45 of the spoiler 40 when the central portion 41 of the spoiler 40 is elastically transformed by being pressed and then is inserted into the below-described seating slot 101 of the seating part 100.

Referring to Fig. 9, the opening 102 is formed under the seating slot 101 of the seating part 100. The seating part 100 includes an inner corner 103. Here, the opening 102 is formed by a pair of right and left extension parts 101 a extending toward the width direction central portion of the seating part 100 from both sides of the lower portion of the seating part 100 so as to form the seating slot 101. A width L1 of the opening 102 is less than an inner width L2 of the seating slot 101.

Here, the extension part 101 a of the seating part 100 may include a first surface which comes in contact with the central portion 41 when the central portion 41 of the spoiler 40 begins to be transformed in order to be pressed and inserted into the seating slot 101 of the seating part 100, and a second surface which comes in contact with the central portion 41 under the state where the central portion 41 of the seating part 100 has been pressed and inserted into the seating slot 101 of the seating part 100. Here, the first surface of the extension part 101 a may be curved such that a thickness of the extension part 101 a is reduced toward the opening 102, or may be curved such that a rate at which the thickness of the extension part 101 a is reduced is gradually increased toward the opening 102. The first surface of the extension part 101 a, the first surface which is adjacent to the opening 102, may be almost vertically formed.

A condition for the central portion 41 of the spoiler 40 to be elastically transformed by being pressed and then is inserted into the seating slot 101 of the seating part 100 includes, for example, a fact that an interval L3 between one upper end of the extension part 101 a of the seating slot 101 and the inner corner 103 opposite to the upper end should be less than a width direction length L4 of the outer contour of the cross section of the central portion 41 of the spoiler 40, the cross section which is perpendicular to the longitudinal direction of the spoiler, and should be greater than a width direction length L5 (see Figs. 4 and 12) of the guide spring 30. Here, the interval L3 between one upper end of the extension part 101 a and the inner corner 103 opposite to the upper end means the maximum interval between one upper end of the extension part 101 a and the inner corner 103.

Here, although Fig. 9 shows that a pair of the right and left extension parts 101 a of the seating part 100 is symmetrical with each other, in other words, Fig. 9 shows that the lengths of a pair of the extension parts 101 a extending toward the width direction central portion of the seating part are the same as each other, the present invention is not limited to this. A pair of the right and left extension parts 101 a may be asymmetric with each other, in other words, the lengths of a pair of the extension parts 101 a may be different from each other. Here, among a pair of the right and left extension parts 101 a, one extension part 101 a formed closer to the second seating surface 106 contacting with the second surface 46 of the second fin 45 of the spoiler 40 may be shorter than the other extension part 101 a.

Referring to Figs. 10a and 10b, a concave portion 108 or a convex portion 109 may be formed on the inner surface 107 of the seating part 100. Here, it is not necessarily required that the concave portion 108 or the convex portion 109 of the inner surface 107 is formed on the entire inner surface 107 of the seating part 100. It can be considered that the concave portion 108 or the convex portion 109 is formed on a portion of the inner surface 107. It can be also considered that the concave portion 108 and the convex portion 109 are formed together with each other or there is a predetermined gap between the concave portions 108 or the convex portions 109.

The concave portion 108 or the convex portion 109 of the inner surface 107 of the seating part 100 may have various shapes. For example, the concave portion 108 of the inner surface 107 of the seating part 100 may have a shape including at least one wedge. Each of the wedges has a catching surface 108a located at a smaller distance along the inner surface 107 of the seating part 100 from the opening 102 of the seating slot 101. The convex portion 109 of the inner surface 107 of the seating part 100 may have a shape including at least one wedge. Each of the wedges has a catching surface 109a located at a greater distance along the inner surface 107 of the seating part 100 from the opening 102 of the seating slot 101.

Hereafter, the coupling method of the flat wiper blade 2 will be sequentially described.

As shown in Figs. 2, 6, 8a and 8b, the wiper strip 10 and the guide spring 30 are guided and inserted into the coupling slot 42 of the spoiler 40 in the longitudinal direction thereof.

According to the embodiment, first, a portion (approximately two thirds of the length of the entire wiper strip 10) of the wiper strip 10 is inserted into the coupling slot 42 of the spoiler 40 in the longitudinal direction thereof.

Next, the guide spring 30 is inserted in the longitudinal direction thereof into a gap between the base 11 of the wiper strip 10 and an inner surface of the spoiler 40.

Here, in the embodiment where the first protrusion 14 is formed on one longitudinal end of the wiper strip 10, where the second protrusion 15 is formed on the other longitudinal end of the wiper strip 10, where the first insertion portion 34 is formed at one longitudinal end of the guide spring 30, and where the second insertion portion 35 is formed at the other longitudinal end of the guide spring 30, since the first protrusion 14 formed on the one longitudinal end of the wiper strip 10 is located within the coupling slot 42 of the spoiler 40, the guide spring 30 should be inserted into the coupling slot 42 in the longitudinal direction such that the first insertion portion 34 which is formed at the one longitudinal end and is open toward the one end is first inserted within the coupling slot 42 of the spoiler 40. The guide spring 30 is inserted into the coupling slot 42 in the longitudinal direction until the first protrusion 14 of the wiper strip 10 is inserted into the first insertion portion 34 of the guide spring 30 in the longitudinal direction (approximately, until the guide spring 30 is inserted by as much as the length of the wiper strip 10 which has been inserted into the coupling slot 42).

Then, the second protrusion 15 formed on the other longitudinal end of the wiper strip 10 is inserted into the second insertion portion 35 formed on the other longitudinal end of the guide spring 30.

Then, the wiper strip 10 and guide spring 30 which have been coupled to each other by the first protrusion 14 and the second protrusion 15 of the wiper strip 10 and the first insertion portion 34 and the second insertion portion 35 of the guide spring 30 are completely inserted into the coupling slot 42 of the spoiler 40. Even though the guide spring 30 is inserted into the coupling slot 42 of the spoiler 40 after the wiper strip 10 is first inserted into the coupling slot 42 of the spoiler 40, the wiper strip 10 and the guide spring 30 are easily arranged and are inserted into the coupling slot 42 of the spoiler 40 by the first protrusion 14 and the second protrusion 15 of the wiper strip 10 and the first insertion portion 34 and the second insertion portion 35 of the guide spring 30.

It has been described that after a portion of the wiper strip 10 is inserted into the coupling slot 42 of the spoiler 40 and a portion of the guide spring 30 is inserted into the coupling slot 42 of the spoiler 40, the wiper strip 10 and the guide spring 30 are completely inserted into the coupling slot 42 of the spoiler 40. However, according to another embodiment, after the wiper strip 10 and the guide spring 30 are first coupled to each other such that the first protrusion 14 and the second protrusion 15 of the wiper strip 10 are inserted respectively into the first insertion portion 34 and the second insertion portion 35 of the guide spring 30, the mutually coupled wiper strip 10 and the guide spring 30 may be inserted into the coupling slot 42 of the spoiler 40 in the longitudinal direction.

As shown in Figs. 1, 9, 13 and 14, the spoiler 40 is coupled to the seating part 100 such that the central portion 41 of the spoiler 40 is elastically transformed by being pressed and then is inserted into the seating slot 101 of the seating part 100.

As shown in Fig. 12, first, after one width direction side of the central portion 41 of the spoiler 40 having the coupling slot 42 into which the wiper strip 10 and the guide spring 30 have been inserted is caused to contact with the inner corner 103 of the seating part 100, an external force is applied such that the other width direction side of the central portion 41 of the spoiler 40 overcomes interference between the other width direction side and the first surface of the extension part 101 a of the seating part 100, the extension part 101 a which contacts with the other width direction side, and the other width direction side is elastically transformed by being pressed and then is inserted into the seating slot 101. As a result, the spoiler 40 is coupled to the seating part 100.

Here, when a pair of the right and left extension parts 101 a of the seating part 100 is asymmetric with each other, in other words, when the lengths of a pair of the extension parts 101 a are different from each other, after one width direction side of the central portion 41 of the spoiler 40 is caused to contact with the inner corner 103 closer to a longer extension part 101 a among a pair of the right and left extension parts 101 a, an external force is applied such that the other width direction side of the central portion 41 of the spoiler 40 overcomes interference between the other width direction side and the first surface of a shorter extension part 101 a among a pair of the right and left extension parts 101 a, the first surface which contacts with the other width direction side, and the other width direction side is elastically transformed by being pressed and then is inserted into the seating slot 101. As a result, the spoiler 40 is coupled to the seating part 100. In this case, since a length of the first surface of the extension part 101 a causing the interference with the central portion 41 of the spoiler 40 is relatively short, the spoiler 40 can be easily pressed and inserted into the seating slot 101 of the seating part 100.

Here, the first surface of the extension part 101 a is curved such that a thickness of the extension part 101 a is reduced toward the opening 102, or is curved such that a rate at which the thickness of the extension part 101 a is reduced is gradually increased toward the opening 102. The first surface of the extension part 101 a, the first surface which is adjacent to the opening 102, is almost vertically formed. Accordingly, when the external force is applied to the spoiler 40 in order to couple the spoiler 40 to the seating part 100 after the other width direction side of the central portion 41 of the spoiler 40 is caused to contact with the first surface of the extension part 101 a, the first surface which is adjacent to the opening 102, the spoiler 40 is pressed in the width direction thereof and is transformed, so that the spoiler 40 can be easily pressed and inserted into the seating slot 101 of the seating part 100.

Here, since the interval L3 between one upper end of the extension part 101 a of the seating slot 101 and the inner corner 103 opposite to the upper end is less than the width direction length L4 (see Fig. 6 and 12) of the outer contour of the cross section of the central portion 41 of the spoiler 40, the cross section which is perpendicular to the longitudinal direction of the spoiler, and is greater than the width direction length L5 (see Figs. 4 and 12) of the guide spring 30, both sides of the central portion 41 of the spoiler 40 is pushed outward from the opening 102 of the seating slot 101 by a friction force between either the opening 102 of the seating slot 101 or the first surface of the extension part 101 a of the seating part 100 and the outer surface 47 of the central portion 41, so that the thickness of both sides of the central portion 41 of the spoiler 40 is reduced from by the push. Accordingly, the central portion 41 of the spoiler 40 is inserted within the coupling slot 42 and is pressed and elastically transformed between either the first surface of the extension part 101 a of the elastic and rigid seating part 100 or the inner surface 107 of the elastic and rigid seating part 100 and the elastic and rigid guide spring 30. As a result, the central portion 41 of the spoiler 40 is elastically transformed by being pressed and then is inserted into the seating slot 101 of the seating part 100.

As shown in Fig. 14, under the state where the central portion 41 of the spoiler 40 has been elastically transformed by being pressed and then is inserted into the seating slot 101 of the seating part 100, the inner surface 107 of the seating part 100 and the second surface of the extension part 101 a may contact with the outer surface 47 of the central portion 41 of the spoiler 40.

However, when it is intended that the spoiler 40 is separated from the seating part 100 after the central portion 41 of the spoiler 40 has been elastically transformed by being pressed and then is inserted into the seating slot 101 of the seating part 100, both sides of the central portion 41 of the spoiler 40 is pushed in an opposite direction to the opening 102 of the seating slot 101 by a friction force between the inner surface 107 of the seating part 100 and the outer surface 47 of the central portion 41, so that the thickness of at least a portion of both sides of the central portion 41 of the spoiler 40 is increased by the push. Since both sides of the central portion 41 of the spoiler 40 are closely contacted between the inner surface 107 of the seating part 100 and the guide spring 30 by a stronger pressure, so that the outer surface 47 of the central portion 41 of the spoiler 40 cannot be separated in a sliding manner from the inner surface 107 of the seating part 100.

Moreover, when it is intended that the spoiler 40 is separated from the seating part 100 after the central portion 41 of the spoiler 40 has been elastically transformed by being pressed and then is inserted into the seating slot 101 of the seating part 100, an area of the central portion 41 of the spoiler 40, the area which is in contact with the second surface of the extension part 101 a, is more compressed by the second surface of the extension part 101 a of the seating part 100. The thickness of at least a portion of both sides of the central portion 41 of the spoiler 40 is increased by the compression. Since both sides of the central portion 41 of the spoiler 40 are closely contacted between the inner surface 107 of the seating part 100 and the guide spring 30 by a stronger pressure, the outer surface 47 of the central portion 41 of the spoiler 40 cannot be separated in a sliding manner from the inner surface 107 of the seating part 100.

As shown in Figs. 10a, 10b, 11 a and 11 b, for the purpose of strengthening such characteristics, the convex portion 48 or the concave portion 49 may be formed on the outer surface 47 of the central portion 41 of the spoiler 40, and the concave portion 108 or the convex portion 109 may be formed on the inner surface 107 of the seating part 100.

As shown in Figs. 15a and 15b, when the central portion 41 of the spoiler 40 is elastically transformed by being pressed and then is inserted into the seating slot 101 of the seating part 100, the convex portion 48 or the concave portion 49 of the outer surface 47 of the central portion 41 of the spoiler 40 may be engaged respectively with the concave portion 108 or the convex portion 109 of the inner surface 107 of the seating part 100.

When it is intended that the spoiler 40 is separated from the seating part 100 after the central portion 41 of the spoiler 40 has been elastically transformed by being pressed and then is inserted into the seating slot 101 of the seating part 100, the convex portion 48 or the concave portion 49 of the outer surface 47 of the central portion 41 of the spoiler 40, and the concave portion 108 or the convex portion 109 of the inner surface 107 of the seating part 100 prevent the outer surface 47 of the central portion 41 of the spoiler 40 from being separated in a sliding manner from the inner surface 107 of the seating part 100. Therefore, this makes sure that the spoiler 40 can never be separated from the seating part 100 unless the seating part 100 is physically damaged.

Therefore, in order that the spoiler 40 is separated from the seating part 100 without physically damaging the seating part 100, only after the guide spring 30 is separated in a sliding manner from the coupling slot 42 of the spoiler 40 in the longitudinal direction under the state where the wiper strip 10, the guide spring 30, the spoiler 40 and the seating part 100 have been coupled to each other, the spoiler 40 should be separated from the seating part 100. In a daily use environment where the flat wiper blade 2 performs a repetitive reciprocating action in a fan shape as a motor drives a link apparatus connected to a wiper arm, the spoiler 40 is not separated from the seating part 100.

Also, as shown in Figs. 2 and 13, when the central portion 41 of the spoiler 40 is elastically transformed by being pressed and then is inserted into the seating slot 101 of the seating part 100, the first surface 44 of the first fin 43 and the first seating surface 104 of the seating part 100 face each other, and the second surface 46 of the second fin 45 the second seating surface 106 of the seating part 100 face each other. After once the spoiler 40 is coupled to the seating part 100, a relative movement between the spoiler 40 and the seating part 100 in the major axial direction of the flat wiper blade 2 is limited.

The flat wiper blade of the prior method includes a flat wiper blade in which the guide spring and the wiper strip are connected to each other by using a yoke, the flat wiper blade in which the seating part is divided into two right and left members and the two members are coupled to each other to surround the right and left of the wiper blade, so that the seating part is fixed, the flat wiper blade in which the seating part is placed on the guide spring and then the legs of the seating part are bent to surround the right and left of the guide spring, so that the seating part is fixed, and the flat wiper blade in which the legs of the seating part, the legs which surround the right and left of the guide spring, are welded with the guide spring by using an ultrasonic, etc., so that the seating part is fixed. However, in the flat wiper blade 2 according to the embodiment of the present invention, the seating part can be fixed by simply pressing and inserting the central portion 41 of the spoiler 40 coupled to both the wiper strip 10 and the guide spring 30 into the seating slot 101 of the seating part 100. As a result, it is possible to minimize the number of the parts required for coupling the guide spring to the wiper strip and to make it simpler to assemble the guide spring and the wiper strip.

Particularly, in the flat wiper blade 2 according to embodiment of the present invention, the central portion 41 of the spoiler 40 may be elastically transformed by being pressed and then is inserted into the seating slot 101 of the seating part 100. When it is intended that the spoiler 40 is separated from the seating part 100 after the central portion 41 of the spoiler 40 has been elastically transformed by being pressed and then is inserted into the seating slot 101 of the seating part 100, the outer surface 47 of the central portion 41 of the spoiler 40 cannot be separated in a sliding manner from the inner surface 107 of the seating part 100. Therefore, under the state where the wiper strip 10, the guide spring 30, the spoiler 40 and the seating part 100 have been coupled to each other, the spoiler 40 may be coupled to the seating part 100 without being separated from each other through the simple structure, unless the seating part 100 is physically damaged.

The guide spring 30 and the wiper strip 10 are coupled to each other without using the yoke, so that the number of the parts required for coupling the guide spring 30 to the wiper strip 10 can be minimized and the spoiler 40 can be manufactured by the extrusion molding method instead of the injection molding method. Accordingly, the manufacturing cost thereof can be reduced.

Also, the coupling slot 42 of the spoiler 40 receives the wiper strip 10 and the guide spring 30 and is coupled in the form of surrounding the wiper strip 10 and the guide spring 30. Accordingly, the wiper strip 10 and the guide spring 30 are not separated from the spoiler 40.

Also, since the wiper strip 10, the guide spring 30, and the spoiler 40 can be coupled to each other without using the yoke, the overall height of the flat wiper blade 2 can be reduced.

The features, structures and effects and the like described in the embodiments are included in at least one embodiment of the present invention and are not necessarily limited to one embodiment. Furthermore, the features, structures, effects and the like provided in each embodiment can be combined or modified in other embodiments by those skilled in the art to which the embodiments belong. Therefore, contents related to the combination and modification should be construed to be included in the scope of the present invention.

Although the embodiments of the present invention were described above, these are just examples and do not limit the present invention. Further, the present invention may be changed and modified in various ways, without departing from the essential features of the present invention, by those skilled in the art. That is, the components described in detail in the embodiments of the present invention may be modified. Further, differences due to the modification and application should be construed as being included in the scope and spirit of the present invention, which is described in the accompanying claims.

## Claims

1. A flat wiper blade comprising:
a wiper strip (10);
a guide spring (30);
a spoiler (40); and
a seating part (10),
wherein the wiper strip (10) and the guide spring (30) are coupled to the spoiler (40),
wherein the spoiler (40) is made of an elastic material and comprises a central portion (41),
wherein the seating part (100) comprises a seating slot (101) into which the central portion (41) of the spoiler (40) is inserted,
and wherein the central portion (41) of the spoiler (40) is elastically transformed by being pressed and then is inserted into the seating slot (101) of the seating part (100).

2. The flat wiper blade of claim 1, wherein the seating part (100) is made of a material which is rigid without being transformed.

3. The flat wiper blade of claim 1 or 2,
wherein an opening (102) is formed under the seating slot (101) by a pair of right and left extension parts (101 a) extending toward a central portion of the seating part (100) from both sides of a lower portion of the seating part (100),
wherein a width L1 of the opening (102) is less than an inner width L2 of the seating slot (101),
wherein the seating part (100) comprises an inner corner (103),
wherein an interval L3 between one upper end of the extension part (101 a) and the inner corner (103) opposite to the upper end is less than a width direction length L4 of an outer contour of a cross section of the central portion (41) of the spoiler (40), the cross section which is perpendicular to a longitudinal direction of the spoiler, and the interval L3 is greater than a width direction length L5 of the guide spring (30),
and wherein the extension part (101 a) of the seating part (100) comprises a first surface which comes in contact with the central portion (41) when the central portion (41) of the spoiler (40) begins to be transformed in order to be pressed and inserted into the seating slot (101) of the seating part (100), and comprises a second surface which comes in contact with the central portion (41) under a state where the central portion (41) of the seating part (100) has been pressed and inserted into the seating slot (101) of the seating part (100).

4. The flat wiper blade of claim 3, wherein the first surface of the extension part (101 a) is curved such that a thickness of the extension part (101 a) is reduced toward the opening (102).

5. The flat wiper blade of claim 3 or 4, wherein lengths of the pair of extension parts (101 a) extending toward the width direction central portion of the seating part (100) are different from each other.

6. The flat wiper blade of one of the claims 1 to 5, wherein the spoiler (40) comprises a coupling slot (42) into which the wiper strip (10) and the guide spring (30) are inserted.

7. The flat wiper blade of one of the claims 1 to 6,
wherein the spoiler (40) comprises a first fin (43) and a second fin (45) which are formed outwardly from the central portion (41) in the longitudinal direction of the spoiler (40),
and wherein, when the central portion (41) of the spoiler (40) is coupled to the seating slot (101) of the seating part (100), a first surface (44) of the first fin (43), the first surface (44) which is toward a longitudinal central portion of the spoiler, mutually faces a first seating surface (104) formed on one longitudinal end of the seating part (100), and a second surface (46) of the second fin (45), the second surface (46) which is toward the longitudinal central portion of the spoiler, mutually faces a second seating surface (106) formed on the other longitudinal end of the seating part (100).

8. The flat wiper blade of one of the claims 1 to 7,
wherein the wiper strip (10) comprises a first protrusion (14) formed on one longitudinal end of the wiper strip (10),
and wherein the guide spring (30) comprises a first insertion portion (34) which is formed on one longitudinal end thereof and into which the first protrusion (14) is inserted.

9. The flat wiper blade of claim 8,
wherein the wiper strip (10) further comprises a second protrusion (15) formed on the other longitudinal end of the wiper strip (10),
and wherein the guide spring (30) comprises a second insertion portion (35) which is formed on the other longitudinal end thereof and into which the second protrusion (15) is inserted.

10. The flat wiper blade of claim 9, wherein the first insertion portion (34) of the guide spring (30) is open toward the one end of the guide spring (30), the one end in which the first insertion portion (34) is formed.

11. The flat wiper blade of one of the claims 1 to 10, wherein the seating part (100) comprises an inner surface (107) on which a concave portion (108) or a convex portion (109) is formed.

12. The flat wiper blade of one of the claims 1 to 11, wherein the central portion (41) of the spoiler (40) comprises an outer surface (47) on which a convex portion (48) or a concave portion (49) is formed.

13. The flat wiper blade of one of the claims 1 to 12,
wherein the seating part (100) comprises an inner surface (107) on which a concave portion (108) or a convex portion (109) is formed,
wherein the central portion (41) of the spoiler (40) comprises an outer surface (47) on which a convex portion (48) or a concave portion (49), each of which corresponds to the concave portion (108) or the convex portion (109) respectively, is formed,
and wherein, when the central portion (41) of the spoiler (40) is coupled to the seating slot (101) of the seating part (100), the convex portion (48) or the concave portion (49) of the outer surface (47) of the central portion (41) of the spoiler (40) is engaged respectively with the concave portion (108) or the convex portion (109) of the inner surface (107) of the seating part (100).

14. The flat wiper blade of claim 11 or 13, wherein the concave portion (108) of the inner surface (107) of the seating part (100) has a shape including at least one wedge having a catching surface (108a) located at a smaller distance along the inner surface (107) from the opening (102), or wherein the convex portion (109) of the inner surface (107) of the seating part (100) has a shape including at least one wedge having a catching surface (109a) located at a greater distance along the inner surface (107) from the opening (102).

15. The flat wiper blade of claim 12 or 13, wherein the convex portion (48) of the outer surface (47) of the central portion (41) of the spoiler (40) has a shape including at least one wedge having a catching surface (48a) located at a smaller distance along the outer surface (47) from the opening (102), or wherein the concave portion (49) of the outer surface (47) of the central portion (41) of the spoiler (40) has a shape including at least one wedge having a catching surface (49a) located at a greater distance along the outer surface (47) from the opening (102).
